# EUROPÄISCHE PATENTSCHRIFT

(11) **EP 3 836 533 B1**
(45) Veröffentlichungstag und Bekanntmachung des Hinweises auf die Patenterteilung: **24.07.2024**
(21) Anmeldenummer: 20213083.7
(22) Anmeldetag: 10.12.2020
(51) Int. Cl.: H04N 5/262, H04N 17/00, H04N 23/80

(54) **VERFAHREN UND VORRICHTUNGEN ZUM EMULIEREN VON KAMERAOBJEKTIVEN**
METHOD AND DEVICES FOR EMULATING CAMERA LENSES
PROCÉDÉ ET DISPOSITIFS D'ÉMULATION DES LENTILLES DE CAMÉRA

(30) Priorität: 11.12.2019 DE 102019134022
(43) Veröffentlichungstag der Anmeldung: 16.06.2021
(73) Patentinhaber: Arnold & Richter Cine Technik GmbH & Co. Betriebs KG, 80807 München (DE)
(72) Erfinder: Kehrer, Klemens, 1180 Wien (AT); Pesch, Matthias, 80796 München (DE); Koppetz, Michael, 81669 München (DE)
(74) Vertreter: Manitz Finsterwald Patent- und Rechtsanwaltspartnerschaft mbB

(56) Entgegenhaltungen:
- JP-A- 2009 253 372
- JP-A- 2014 225 786
- US-A1- 2019 197 731

## Beschreibung

Die Erfindung betrifft Verfahren und Vorrichtungen zum Emulieren von Kameraobjektiven, insbesondere Verfahren und Vorrichtungen zur Anpassung der Abbildungseigenschaften eines fotografischen Objektivs und Verfahren und Vorrichtungen zum Konfigurieren von solchen Verfahren und Vorrichtungen zur Anpassung.

Eine elektronische Bewegtbildkamera umfasst üblicherweise ein integriertes optisches System (also ein Kameraobjektiv oder kurz: Objektiv) oder einen Objektivanschluss zum Montieren eines Wechselobjektivs, ferner einen elektronischen Bildsensor zum Erzeugen von Bildsignalen aus einfallendem Licht und eine Bildsignalverarbeitungseinrichtung zum Erzeugen eines digitalen Bilddatenstroms aus den Bildsignalen. Der Bilddatenstrom kann mehrere Bilddatensätze, die kurz als Bilder bezeichnet werden können, enthalten oder aus ihnen bestehen.

In der professionellen Bewegtbildfotografie werden in erster Linie Kameras mit Wechselobjektiven eingesetzt. Die jeweiligen Objektive unterscheiden sich zum Beispiel in ihrer Brennweite, so dass durch den Wechsel unterschiedliche Aufnahmesituationen berücksichtigt werden können. Es sind ferner Objektivreihen bekannt, bei denen die einzelnen Objektive so aneinander angepasst sind, dass auch beim Wechsel zwischen einer Brennweite und der anderen die Bildanmutung - etwa die Farbwiedergabe oder die Auflösungsleistung - subjektiv gleichbleibt.

Es ist auch bekannt, dass jedes reale Objektiv physikalisch bedingte Grenzen in der Abbildungsleistung aufweist. Je nachdem, wie das Objektiv berechnet, konstruiert und gefertigt worden ist, treten sichtbare Abbildungsfehler wie z.B. Farbfehler, Verzerrungen oder Streulichtreflexe mehr oder weniger auf. Auf der einen Seite wird versucht, diese Fehler zu minimieren, auf der anderen Seiten werden minimale Restfehler auch als Bestandteil der Abbildungscharakteristik eines Objektivs wahrgenommen. Diese Eigenschaften können auch durchaus gewollt sein im Sinne einer ästhetischen Wirkung des aufgenommenen Bildes. Die ästhetische Wirkung bezieht sich dabei auch nicht nur auf die scharf abgebildeten Bereiche des Bildes, sondern auch die Art, wie ein Objektiv unscharfe Bereiche des Bildes darstellt, kann zu der Gesamtwirkung beitragen.

Bisher wurden Objektive hauptsächlich im Hinblick auf quantitativ messbare Parameter wie Kontrastübertragung (Modulationsübertragungsfunktion, MTF), Verzerrung, Farbaberration etc. optimiert. Es sind Simulationsprogramme bekannt, die anhand von optischen Gesetzmäßigkeiten diese Parameter für ein vorgegebenes Objektivdesign berechnen können, um so den Optimierungsprozess zu unterstützen.

Beispielsweise ist aus JP 2014 225 786 A ein Verfahren bekannt, bei welchem Bilder mittels einer Kamera unter Berücksichtigung von Objektiv- oder Sensoreigenschaften einer anderen Kamera aufgenommenen werden, um die aufgenommenen Bilder solchen Bildern anzunähern, welche bei einer Aufnahme mit der anderen Kamera zu erwarten wären. Insbesondere ist beschrieben, mittels der Kamera mehrere Bilder bei unterschiedlichen Belichtungszeiten aufzunehmen und diese Bilder zu kombinieren, um sich voneinander unterscheidende Dynamikumfänge der Bildsensoren der Kameras berücksichtigen zu können.

In JP 2009 253 372 A ist ferner beschrieben, einem Nutzer einer Kamera, mit welcher mehrere Objektive wahlweise verbindbar sind, nach einer Aufnahme unter Verwendung eines Objektivs an einem Display der Kamera ein Bild anzuzeigen, welches bei der Verwendung eines anderen, nicht mit der Kamera verbundenen Objektivs aufgenommen würde. Beispielsweise kann dazu die Brennweite der Objektive verglichen und lediglich ein Bildausschnitt angezeigt werden, welcher bei der Verwendung des anderen Objektivs von der Kamera abgebildet worden wäre. Das andere Objektiv kann der Nutzer dazu aus einem Katalog in einem Menü auswählen.

In US 2019/197731 A1 ist ein Verfahren zum Modellieren eines Systems einer Kamera mit einem Objektiv und einem Bildwandler beschrieben, bei welchem ein Modell des Objektivs und ein Modell des Bildwandlers durch einen Deep-Learning Algorithmus optimiert werden.

Spezifische Informationen über das Design eines Objektivs können verwendet werden, um die korrigierende Bildverarbeitung zu verbessern. Insbesondere bei Wechselobjektiven kann es von Vorteil sein, wenn die Bildverarbeitung individuell angepasst werden kann. Es ist beispielsweise möglich, die relevanten Informationen im jeweiligen Objektiv zu speichern und dann an die Bildverarbeitungssoftware weiterzugeben, wenn das Objektiv mit der Kamera verbunden wird. Des Weiteren ist es möglich, dass das spezifische Objektiv von der Bildbearbeitungssoftware erkannt wird und die für die Korrektur relevanten Informationen aus einer entsprechenden Datenbank entnommen werden.

Das verwendete Kameraobjektiv hat einen entscheidenden Einfluss auf die Wirkung der von der Bewegtbildkamera aufgenommenen Bilder (also die subjektive Wahrnehmung einer Abbildungscharakteristik des Objektivs, was auch als "Look" des Objektivs bezeichnet werden kann).

Ein derartiger Look kann insbesondere aus einer bestimmten Beschaffenheit und Anordnung der verwendeten Linsen resultieren, die beispielsweise für einen bestimmten Objektivhersteller und/oder eine bestimmte Zeitepoche charakteristisch sein kann. Ein solches charakteristisches Erscheinungsbild kann für den Fachmann erkennbar sein.

Die Anwender sind dabei stets auf der Suche nach neuartigen Looks von Objektiven. Die Entwicklung eines Objektivs mit einem spezifischen Look ist dabei sehr aufwendig. Der Einsatz von Filtern oder die Verstellung einzelner optischer Parameter kann die nuancierten Effekte des realen Objektivs, die zum spezifischen Look führen, nur bedingt annähern.

Wenn es darum geht, bei dem Entwurf eines Objektivs eine ganz bestimmte Bildcharakteristik zu erzielen (beispielsweise durch die Minimierung der Restfehler, die Anpassung an ein existierendes Objektiv oder die Erzeugung eines Bestimmten ästhetischen Eindrucks), setzen alle bekannte Verfahren auf eine Modellierung der optischen Gegebenheiten basierend auf bekannten physikalischen Gesetzmä-ßigkeiten.

Um eine genaue Modellierung des Abbildungsverhaltens zu erreichen, ist eine sehr komplexe mathematische Darstellung der physikalischen Gegebenheiten erforderlich. Effekte wie Streulicht oder die Darstellung von unscharfen Bereichen können extrem schwierig zu modellieren sein, da sie von einer großen Vielzahl von Parametern abhängen.

Aus diesem Grund ist die Implementierung einer Objektivkorrektur auf der Basis einer nachgeschalteten Bildverarbeitung limitiert. Insbesondere bei Implementierungen, die in Echtzeit oder direkt in einer Kamera wirken sollen, können die Grenzen der verfügbaren Rechenleistung schnell erreicht werden. In Folge können nur vereinfachte Rechenverfahren eingesetzt werden, die wiederum nur bedingt die gewünschten optischen Effekte emulieren können.

Physikalische Modelle der Objektive also können die subjektiven Eigenschaften der Objektive nur bedingt beschreiben oder müssten so komplex sein, dass sie nicht in Echtzeit einsetzbar wären.

Es ist eine Aufgabe der Erfindung, Verfahren und Vorrichtungen anzugeben, welche das Erzeugen von Bildern mit einem objektivspezifischen Look ermöglichen, ohne das entsprechende Objektiv direkt einzusetzen.

Die Lösung der Aufgabe erfolgt durch ein Verfahren zum Konfigurieren eines Emulationsverfahrens zum Emulieren eines zweiten Kameraobjektivs mit den Merkmalen des Anspruchs 1, ein Computerprogrammprodukt mit den Merkmalen des Anspruchs 13 und eine Bewegtbildkamera mit den Merkmalen des Anspruchs 14. Vorteilhafte Ausführungsformen der Verfahren, des Computerprogrammprodukts und der Bewegtbildkamera sind in den Unteransprüchen angegeben oder ergeben sich aus der Beschreibung oder den Figuren.

Ein derartiges Verfahren zum Konfigurieren eines Emulationsverfahrens zum Emulieren eines zweiten Kameraobjektivs umfasst wenigstens die folgenden Schritte: Ermitteln einer Mehrzahl von unter Verwendung eines ersten Kameraobjektivs aufgenommenen ersten Bildern; Ermitteln einer Mehrzahl von unter Verwendung des zweiten Kameraobjektivs aufgenommenen zweiten Bildern, deren Bildinhalt dem Bildinhalt der Mehrzahl von ersten Bildern entspricht; und Konfigurieren des Emulationsverfahrens zum Emulieren des zweiten Kameraobjektivs basierend auf der Mehrzahl von ersten Bildern und der Mehrzahl von zweiten Bildern.

In anderen Worten konfiguriert ein derartiges Verfahren ein Emulationsverfahren, das basierend auf einem mittels eines ersten Objektivs aufgenommenen Bildes den Look des zweiten Bildes emuliert (ohne den eigentlichen Inhalt des aufgenommenen Bildes, also das, was auf dem aufgenommenen Bild dargestellt ist, zu verändern). Das Verfahren konfiguriert das Emulationsverfahren basierend auf einer Mehrzahl von ersten Bildern, die mittels des ersten Objektivs aufgenommen sind, und einer zugehörigen Mehrzahl von zweiten Bildern, die mittels des zweiten Objektivs aufgenommen sind. Dabei ist jedem ersten Bild ein zweites Bild zugeordnet, so dass das erste Bild und das zugeordnete zweite Bild den gleichen Bildinhalt haben (aber mit unterschiedlichen Objektiven aufgenommen sind).

Als "Emulation" des zweiten Kameraobjektivs kann dabei eine Nachbildung dessen, was bei Einsatz des zweiten Kameraobjektivs als Bild erhalten werden würde, verstanden werden. Das zweite Kameraobjektiv kann auch als zu emulierendes Objektiv bezeichnet werden. Das Ergebnis der Emulation kann als emuliertes Bild bezeichnet werden.

Anschaulich werden dem Verfahren erste Bilder und zweite Bilder bereitgestellt, um so ein Emulationsverfahren zu konfigurieren (in anderen Worten: zu trainieren), nämlich dadurch, dass dem Emulationsverfahren die ersten Bilder als Eingabe bereitgestellt werden, und die Ausgaben des Emulationsverfahrens (also die emulierten Bilder) mittels der zweiten Bilder bewertet werden. Idealerweise sind die emulierten Bilder zumindest vom Bildeindruck oder der Wirkung oder dem subjektiven Eindruck (also Look) her ähnlich oder identisch zu den zweiten Bildern. Die Mehrzahl von ersten Bildern und die Mehrzahl von zweiten Bildern können als Trainingsdatensatz bezeichnet werden. Der Trainingsdatensatz kann beliebige reale Szenen oder auch Durchlicht-Bildvorlagen enthalten. Der Trainingsdatensatz kann Bilder enthalten, bei denen Bildeinstellungen wie beispielsweise Auflösung, Kontrastumfang, Farbe, oder Tiefenstaffelung variiert sind.

Das Emulationsverfahren kann dabei iterativ, beispielsweise durch Rückkopplung einer Bewertung der emulierten Bilder, konfiguriert werden. Die Rückkopplung kann eine Bewertung des Bildeindrucks oder der Wirkung oder des subjektiven Eindrucks auf Ähnlichkeit oder Identität zwischen den ersten Bildern und den zweiten Bildern umfassen.

Das Emulationsverfahren oder eine Vorrichtung, die das Emulationsverfahren ausführt, kann auch als Generator bezeichnet werden. Das Verfahren oder eine Vorrichtung, die zum Bewerten der emulierten Bilder eingerichtet ist, kann als Diskriminator bezeichnet werden.

Gemäß einer Ausführungsform umfasst der Schritt des Konfigurierens des Emulationsverfahrens ein Ermitteln von Parametern, die das zweite Kameraobjektiv repräsentieren. Verschiedene zweite Kameraobjektive können also durch verschiedene Parameter (oder verschiedene Parametersätze) repräsentiert werden.

Gemäß einer Ausführungsform sind die Mehrzahl von ersten Bildern unter vorgegebenen Bedingungen aufgenommen, und die Mehrzahl von zweiten Bildern unter den vorgegebenen Bedingungen aufgenommen, wobei die vorgegebenen Bedingungen mindestens eine vorgegebene Beleuchtungssituation und/oder mindestens eine vorgegebene Kameraobjektivblendeneinstellung und/oder mindestens eine vorgegebene Kameraobjektivfokuseinstellung und/oder mindestens eine vorgegebene Kameraobjektivbrennweiteneinstellung und/oder mindestens eine Kamerasensorempfindlichkeitseinstellung und/oder mindestens eine Kamerasensorweißabgleicheinstellung aufweisen. Indem die ersten Bilder und die zweiten Bilder gleichen vorgegebenen Bedingungen entsprechen, wie beispielsweise einer gleichen Blendeneinstellung und einer gleichen Fokuseinstellung des für die Erzeugung des jeweiligen Bildes verwendeten Objektivs, kann ein besonders genaues Konfigurieren des Emulationsverfahrens erfolgen.

Es hat also jedes der ersten Bilder ein korrespondierendes, unter den gleichen Bedingungen aufgenommenes, zweites Bild. Diese korrespondierenden Bilder ermöglichen es, das Emulationsverfahren zu konfigurieren. Anschaulich wird das Emulationsverfahren so konfiguriert, dass die ersten Bilder so bearbeitet werden, dass sie den zweiten Bildern entsprechen, insbesondere was den Look betrifft. Das so konfigurierte Emulationsverfahren kann dann für auch für mit dem ersten Objektiv aufgenommene Bilder, die nicht in dem Trainingsdatensatz enthalten sind, also für die kein entsprechendes mit dem zweiten Objektiv aufgenommenes Bild zur Verfügung steht, ein emuliertes Bild erzeugen (und so das zweite Objektiv emulieren).

Gemäß einer Ausführungsform umfasst das Verfahren den Schritt des Erzeugens der Mehrzahl von ersten Bildern und den Schritt des Erzeugens der Mehrzahl von zweiten Bildern, wobei die Mehrzahl von ersten Bildern und die Mehrzahl von zweiten Bildern gleichzeitig, also paarweise simultan, mit zwei verschiedenen Bildsensoren aufgenommen werden.

Gemäß einer Ausführungsform wird für das gleichzeitige Aufnehmen der Mehrzahl von ersten Bildern und der Mehrzahl von zweiten Bildern ein jeweiliges Bildmotiv über einen Strahlteiler (beispielsweise einen teildurchlässigen Spiegel) von dem ersten Kameraobjektiv auf einen ersten Bildsensor und über den Strahlteiler von dem zweiten Kameraobjektiv gleichzeitig auf einen zweiten Bildsensor abgebildet (z.B. durch Transmission bzw. durch Reflexion). Durch den Strahlteiler können die optischen Achsen des ersten Objektivs und des zweiten Objektivs einander überlagert werden. Der erste Bildsensor und der zweite Bildsensor können dabei vom gleichen Typ (also baugleich) und/oder identisch konfiguriert sein, sodass Unterschiede zwischen dem ersten Bild und den zweiten Bild im Wesentlichen alleine auf die Verwendung des ersten Objektivs für das erste Bild und des zweiten Objektivs für das zweite Bild zurückzuführen sind.

Ferner können die Mehrzahl von ersten Bildern und die Mehrzahl von zweiten Bildern nacheinander mit demselben Bildsensor aufgenommen werden. Dies ist insbesondere bei statischen Bildinhalten möglich, also bei Bildinhalten, die sich zwischen dem Zeitpunkt, zu dem ein erstes Bild aufgenommen wird und dem Zeitpunkt, zu dem das dem ersten Bild entsprechende zweite Bild aufgenommen wird, nicht verändern.

Alternativ können die ersten Bilder und/oder die zweiten Bilder auch auf bestehendem (z.B. historischem) Bildmaterial basieren. Generell können die ersten Bilder und/oder die zweiten Bilder auch künstlich generiert oder digital nachbearbeitet sein.

Ferner können die Mehrzahl von zweiten Bildern und die entsprechenden Vorlagen bzw. Bildmotive als ein Trainingsdatensatz bereitgestellt werden, der es ermöglicht, die Mehrzahl von ersten Bildern räumlich und zeitlich entkoppelt von den zweiten Bildern zu erzeugen, um ein Emulationsverfahren zum Emulieren eines zweiten Kameraobjektivs zu konfigurieren. Hierdurch kann ein Trainingsdatensatz bereitgestellt werden, der insbesondere einem historischen Archiv von Bildern entsprechen kann, die mittels des zweiten Kameraobjektivs erzeugt wurden. Aufgrund eines solchen Trainingsdatensatzes wird für das Konfigurieren des Emulationsverfahrens das zweite Kameraobjektiv nicht unmittelbar benötigt. Für das Konfigurieren des Emulationsverfahrens kann vorgesehen sein, dass die Mehrzahl von ersten Bildern zwar mittels eines anderen (ersten) Kameraobjektivs erzeugt werden, wobei jedoch vorzugsweise derselbe Bildsensor, ein gleichartiger Bildsensor oder ein gleichartig konfigurierter Bildsensor wie für das ursprüngliche Erzeugen der Mehrzahl von zweiten Bildern verwendet wird. Das Erzeugen der Mehrzahl von ersten Bildern kann anhand der Vorlagen des Trainingsdatensatzes erfolgen.

Gemäß einer Ausführungsform verwendet das Emulationsverfahren ein erstes künstliches neuronales Netz. Gemäß einer Ausführungsform weist das erste künstliche neuronale Netz ein deconvolutionales neuronales Netz auf. Ein derartiges deconvolutionales neuronales Netz kann zumindest eine deconvolutionale Schicht enthalten. Ein deconvolutionales neuronales Netz kann auch eine Mehrzahl von deconvolutionalen Schichten enthalten. Ein deconvolutionales neuronales Netz kann neben der mindestens einen deconvolutionalen Schicht auch weitere Schichten (die keine deconvolutionale Schichten sind) enthalten.

Dabei können künstliche neuronale Netze, insbesondere deconvolutionale neuronale Netze, von vorgegebener Struktur verwendet werden, wobei Parameter die Verknüpfung der einzelnen Neuronen innerhalb des künstlichen neuronalen Netzes beschreiben.

Das Konfigurieren des Emulationsverfahrens, also das Konfigurieren des künstlichen neuronalen Netzes, kann dann ein Bestimmen dieser Parameter enthalten. Insbesondere können die Parameter so bestimmt werden, dass die emulierten Bilder (also die Bilder, die das Emulationsverfahren aus den ersten Bildern erzeugt) möglichst gut mit den zweiten Bildern übereinstimmen.

Insbesondere kann gemäß einer Ausführungsform das Emulationsverfahren durch Optimierung einer Zielfunktion konfiguriert werden.

Gemäß einer Ausführungsform basiert die Zielfunktion darauf, inwieweit sich ein jeweiliges erstes Bild (der Mehrzahl von ersten Bildern) nach einer Bearbeitung durch das Emulationsverfahren von einem entsprechenden zweiten Bild (der Mehrzahl von zweiten Bildern) unterscheidet. Der Unterschied zwischen zwei Bildern kann dabei pixelweise (also nach Bildpunktelementen), oder pixelgruppenweise (also nach Gruppen von mehreren, insbesondere benachbarten Bildpunktelementen), oder auf andere Weise ermittelt werden. Beispielsweise kann gemäß einer Ausführungsform die Zielfunktion darauf basieren, inwieweit ein jeweiliges erstes Bild nach einer Bearbeitung durch das Emulationsverfahren auf einen (menschlichen) Betrachter den Eindruck erweckt, mittels des zweiten Kameraobjektivs aufgenommen worden zu sein.

Anstelle eines menschlichen Betrachters kann gemäß einer Ausführungsform ein zweites künstliches neuronalen Netz verwendet werden, das darauf trainiert ist zu erkennen, ob ein Bild mittels des zweiten Kameraobjektivs aufgenommen worden ist oder nicht. Es kann also gemäß einer Ausführungsform die Zielfunktion auf einem zweiten künstlichen neuronalen Netz (welches ein Beispiel für einen Diskriminator sein kann) basieren. Gemäß einer Ausführungsform weist das zweite künstliche neuronale Netz ein convolutionales neuronales Netz auf. Ein derartiges convolutionales neuronales Netz kann zumindest eine convolutionale Schicht enthalten. Ein convolutionales neuronales Netz kann auch eine Mehrzahl von convolutionalen Schichten enthalten. Ein convolutionales neuronales Netz kann neben der mindestens einen convolutionalen Schicht auch weitere Schichten (die keine convolutionalen Schichten sind) enthalten.

Im Zusammenspiel mit dem ersten künstlichen neuronalen Netz kann so eine Konkurrenz zwischen dem ersten künstlichen neuronalen Netz und dem zweiten künstlichen neuronalen Netz entstehen, wobei das erste künstliche neuronale Netz versucht, das emulierte Bild möglichst nicht unterscheidbar von einem mittels des zweiten Objektivs aufgenommenen Bilds zu erstellen, und wobei das zweite künstliche neuronale Netz versucht, jedes Bild, das nicht mittels des zweiten Objektivs aufgenommen wurde (also auch jedes emulierte Bild), als solches zu identifizieren. So kann gemäß einer Ausführungsform das Emulationsverfahren basierend auf einem Nullsummenspiel zwischen dem ersten künstlichen neuronalen Netz und dem zweiten künstlichen neuronalen Netz konfiguriert werden. Ziel des Trainings des ersten künstlichen neuronalen Netzes (also des Emulationsverfahrens) ist es, dass das erste künstliche neuronale Netz emulierte Bilder erzeugt, so, dass das zweite künstliche neuronale Netz die emulierten Bilder für vom zweiten Objektiv stammend hält.

Gemäß einer Ausführungsform umfasst das Verfahren ferner den Schritt eines abwechselnden Optimierens des ersten künstlichen neuronalen Netzes und des zweiten künstlichen neuronalen Netzes.

Dabei können Eingangsdaten für die Optimierungen mehrfach (also in mehreren Optimierungsschritten, beispielsweise sowohl für das Emulationsverfahren als auch für das Verfahren zum Konfigurieren des Emulationsverfahrens) verwendet werden.

Eingangsdaten für die Optimierung des Generators (also des Emulationsverfahrens) können erste Bilder, die mittels des ersten Objektivs aufgenommen wurden, und (inhaltsgleiche) zweite Bilder, die mittels des zweiten Objektivs aufgenommen wurden, sein.

Die Eingangsdaten für die Optimierung des Generators können auch historische Bilder oder historisches Filmmaterial enthalten, das mittels eines zweiten Objektivs aufgenommen wurde, das nicht mehr verfügbar ist. Da bei der Erstellung des alten Filmmaterials nur das zweite Objektiv zum Einsatz gekommen sein kann, ist es für die Verwendung des Verfahrens zum Konfigurieren des Emulationsverfahrens nötig, die entsprechenden mittels des ersten Objektivs aufgenommenen Bilder (oder das entsprechende Filmmaterial) bereitzustellen. Dies kann beispielsweise durch manuelles Bearbeiten erfolgen, so dass die ersten Bilder den Eindruck erwecken, mittels des ersten Objektivs aufgenommen worden zu sein.

Eingangsdaten für die Optimierung des Diskriminators (also einer Bewertungseinheit) können wie folgt sein:
- Bilder, die tatsächlich mittels des zweiten Objektivs aufgenommen wurden, zusammen mit der Information, dass diese Bilder mittels des zweiten Objektivs aufgenommen wurden (diese Bilder sollen vom Diskriminator als vom zweiten Objektiv stammend - also als mittels des zweiten Objektivs aufgenommen - erkannt werden);
- emulierte Bilder, die tatsächlich vom erstem Objektiv stammen, aber mittels des Emulationsverfahrens auf den Look des zweiten Objektivs emuliert wurden, zusammen mit der Information, dass diese Bilder nicht mittels des zweiten Objektivs aufgenommen wurden (diese Bilder sollen vom Diskriminator als nicht vom zweiten Objektiv stammend erkannt werden); und
- Bilder, die mittels des ersten Objektivs aufgenommen wurden, zusammen mit der Information, dass diese Bilder nicht mittels des zweiten Objektivs aufgenommen wurden (diese Bilder sollen vom Diskriminator als nicht vom zweiten Objektiv stammend erkannt werden).

Die Erfindung bezieht sich auch auf ein Verfahren zum Emulieren eines zweiten Kameraobjektivs, mit den Schritten: Ermitteln eines unter Verwendung eines ersten Kameraobjektivs aufgenommenen Bilds; Ermitteln von Parametern, die das zweite Kameraobjektiv repräsentieren; und Anwenden einer Bearbeitungsvorschrift auf das ermittelte Bild unter Verwendung der Parameter, um das zweite Kameraobjektiv zu emulieren, wobei das Emulationsverfahren gemäß dem wie oben beschriebenen Konfigurationsverfahren bzw. gemäß einer hierzu beschriebenen Ausführungsform konfiguriert wurde.

In diesem Sinne können die Parameter vom Emulationsverfahren eingesetzt werden, um basierend auf dem ersten Bild, das mittels des ersten Objektivs aufgenommen wurde, ein Bild zu erzeugen, das den gleichen Inhalt hat wie das erste Bild, jedoch den Look des zweiten Objektivs hat. Dabei können durch Ausführung des beschriebenen Verfahrens zum Konfigurieren des Emulationsverfahrens für verschiedene zweite Kameraobjektive unterschiedliche Parametersätze erstellt werden, wobei jeder Parametersatz eines der mehreren zweiten Kameraobjektive repräsentiert. Damit kann dann ausgehend von einem ersten Bild eine Mehrzahl von verschiedenen zweiten Kameraobjektiven emuliert werden (durch Auswahl des entsprechenden Parametersatzes).

Das Emulationsverfahren kann eine feste Struktur haben, d.h. feste Vorschriften enthalten, wie das Bild mittels der Parameter bearbeitet werden soll, um so das emulierte Bild zu erhalten. Dabei parametrieren die Parameter diese Vorschriften. Das Emulationsverfahren kann in der Kamera (also on-the-fly, also im Wesentlichen direkt im Anschluss an das Aufnehmen des Bildes mittels des realen Objektivs) oder nachträglich, d.h. nach einem Speichern der Bilddatensätze und insbesondere an einem von der Kamera unabhängigen Ort, durchgeführt werden. Beispielsweise können mehrere Bilder oder eine oder mehrere Bewegtbildsequenzen, die jeweils aus mehreren Bildern bestehen, mittels eines ersten Kameraobjektivs aufgenommen und gespeichert werden, und danach können basierend auf diesen Bildern oder Bewegtbildsequenzen emulierte Bilder oder Bewegtbildsequenzen erzeugt werden.

Gemäß einer Ausführungsform des Emulationsverfahrens weist die Bearbeitungsvorschrift ein künstliches neuronales Netz, beispielsweise ein deconvolutionales neuronales Netz auf.

Bei dem Emulationsverfahren kann das Konfigurieren des Verfahrens ferner ein Bestimmen der Parameter umfassen.

Beispielsweise können die Parameter in der Bewegtbildkamera oder in einer Datenbank gespeichert sein, und aus der Bewegtbildkamera oder der Datenbank ausgelesen werden. Die Datenbank kann auch auf einem dezentralen Server (beispielsweise in einer Cloud) abgelegt sein.

In der Datenbank können mehrere Sätze von Parametern gespeichert sein. Jeder Satz von Parametern kann ein bestimmtes zu emulierendes Objektiv repräsentieren. Jeder Satz von Parametern kann ferner ein bestimmtes erstes Objektiv (als ein tatsächlich eingesetztes Objektiv) repräsentieren, mittels dessen die Bilder, basierend auf denen das zweite Objektiv emuliert werden soll, aufgenommen sind.

Gemäß einer Ausführungsform des Emulationsverfahrens sind die Parameter in verschlüsselter Form bereitgestellt, wobei der Schritt des Ermittelns der Parameter ein Entschlüsseln der Parameter basierend auf einem Benutzerschlüssel (der auch als Nutzungsschlüssel bezeichnet werden kann) umfasst. Der Benutzerschlüssel kann angeben, auf welche der mehreren Parametersätze (also für welche der mehreren zu emulierenden Objektive und/oder für welche der mehreren tatsächlich eingesetzten Objektive) der Benutzer zugreifen darf. Hierdurch können unterschiedliche Benutzerberechtigungen festgelegt werden.

Der Benutzerschlüssel kann sich auf das bearbeitete Bild, das erste Objektiv und/oder das zweite Objektiv sowie auf das Emulationsverfahren (in anderen Worten auf eine Transformation) bezüglich eines ersten Objektivs und eines zweiten Objektivs (also bezüglich eines Objektivpaars) beziehen. Der Nutzungsschlüssel kann zeitlich beschränkt sein.

Gemäß einer Ausführungsform des Emulationsverfahrens sind eine Mehrzahl von Parametersätzen bereitgestellt, die einer Mehrzahl von verschiedenen zweiten Kameraobjektiven und/oder einer Mehrzahl von Kameraobjektivblendeneinstellungen und/oder einer Mehrzahl von verschiedenen ersten Kameraobjektiven und/oder einer Mehrzahl von Kameraobjektivfokuseinstellungen und/oder einer Mehrzahl von Kameraobjektivbrennweiteneinstellungen und/oder einer Mehrzahl von Kamerasensorempfindlichkeitseinstellungen und/oder einer Mehrzahl von Kamerasensorweißabgleicheinstellungen entsprechen; wobei das Verfahren ferner die Schritte umfasst: Auswählen eines der zweiten Kameraobjektive und/oder eines der ersten Kameraobjektive und/oder einer Kameraobjektivblendeneinstellung und/oder einer Kameraobjektivfokuseinstellung und/oder einer Kameraobjektivbrennweiteneinstellung und/oder einer Kamerasensorempfindlichkeitseinstellung und/oder einer Kamerasensorweißabgleicheinstellung; Ermitteln eines Parametersatzes, der Parameter, die das ausgewählte zweiten Kameraobjektiv und/oder das ausgewählte erste Kameraobjektiv und/oder die ausgewählte Kameraobjektivblendeneinstellung und/oder die ausgewählte Kameraobjektivfokuseinstellung und/oder die ausgewählte Kameraobjektivbrennweiteneinstellung und/oder die ausgewählte Kamerasensorempfindlichkeitseinstellung und/oder die ausgewählte Kamerasensorweißabgleicheinstellung repräsentieren, enthält; und Anwenden der Bearbeitungsvorschrift auf das ermittelte Bild unter Verwendung der Parameter des ermittelten Parametersatzes, um das zweite Kameraobjektiv zu emulieren (also um das ausgewählte zweite Kameraobjektiv unter Verwendung des ersten Kameraobjektivs und/oder die ausgewählte Kameraobjektivblendeneinstellung und/oder die ausgewählte Kameraobjektivfokuseinstellung und/oder die ausgewählte Kameraobjektivbrennweiteneinstellung und/oder die ausgewählte Kamerasensorempfindlichkeitseinstellung und/oder die ausgewählte Kamerasensorweißabgleicheinstellung zu emulieren).

Für ein Objektivpaar (als für ein bestimmtes erstes Objektiv und ein bestimmtes zweites Objektiv) kann es mehrere Parametersätze für das Emulationsverfahren geben, beispielsweise für verschiedene Einstellungen der Objektive wie Fokus oder Irisblende. Bei der Verwendung des zweiten Objektivs können dessen Einstellungen erfasst werden und die Daten genutzt werden, um einen geeigneten Parametersatz für die Transformation auszuwählen.

Dabei kann das Auswählen eines der zweiten Kameraobjektive aufgrund einer Benutzereingabe erfolgen. Das Auswählen der jeweiligen Kameraobjektiveinstellung kann aufgrund einer Benutzereingabe erfolgen oder automatisch geschehen (beispielsweise basierend auf einer elektronischen Identifikation, beispielsweise basierend auf Metadaten, die in den Bilddatensätzen (der Bilder, die mittels des ersten Objektivs aufgenommen wurden) enthalten sind, z.B. LDS-Daten (Lens Data System)-Daten). Die elektronische Identifikation kann bei der Aufnahme des ersten Bildes weitergegeben werden, um die richtigen Parameter für das Emulationsverfahren auszuwählen.

Falls Parameter (oder Parametersätze) für verschiedene erste Objektive bereit stehen, dann kann die Auswahl des Parameter, die dem tatsächlich eingesetzten ersten Objektiv zugeordnet sind, aufgrund einer Benutzereingabe erfolgen oder automatisch geschehen (beispielsweise basierend auf Metadaten, die in den Bilddatensätzen (der Bilder, die mittels des ersten Objektivs aufgenommen wurden) enthalten sind, z.B. mittels LDS (Lens Data System)-Daten, welche Informationen über das Modell des ersten Objektivs enthalten).

Gemäß einer Ausführungsform bildet das erste Kameraobjektiv für das Ermitteln des Bilds ein Bildmotiv auf einen Bildsensor ab und der Bildsensor erzeugt entsprechende Bildsignale. Bilddatensätze enthalten die Bildsignale in digitaler Form und können auch weiterbearbeitet sein (z.B. linearisiert oder logarithmiert). Bilddatensätze können zusätzlich auch Metadaten enthalten, z.B. ein Zeitsignal, ein Tonsignal, und/oder Kameraobjektiveinstellungen. Die Bilddatensätze können kurz auch als Bilder bezeichnet werden.

Die Erfindung bezieht sich auch auf ein Computerprogrammprodukt, umfassend Befehle, die bei der Ausführung durch einen Computer diesen veranlassen, eines der vorstehenden Verfahren (Konfigurationsverfahren, Emulationsverfahren) auszuführen. Als Computer ist in diesem Zusammenhang eine elektronische Recheneinheit zu verstehen.

Die Erfindung bezieht sich auch auf eine Bewegtbildkamera, die zum Aufnehmen einer zeitlichen Folge von Einzelbildern ausgebildet ist und die eine Steuereinheit aufweist, welche dazu ausgebildet ist, die Einzelbilder gemäß einem der vorstehend beschriebenen Emulationsverfahren zu bearbeiten, beispielsweise in Echtzeit zu bearbeiten.

Gemäß einer Ausführungsform ist die Steuereinheit dazu ausgebildet, ein künstliches neuronales Netz zu bilden. Das künstliche neuronale Netz kann durch die Parameter parametrisierbar sein, wie oben im Zusammenhang mit dem Emulationsverfahren beschrieben.

Gemäß einer Ausführungsform weist die Steuereinheit ein Entschlüsselungsmodul auf, welches dazu ausgebildet ist, die Parameter zu entschlüsseln.

Gemäß einer Ausführungsform weist die Bewegtbildkamera ein Gehäuse auf, welches einen Bildsensor zum Erzeugen von Bildsignalen beherbergt und welches einen Wechselobjektivanschluss aufweist, an dem das erste Kameraobjektiv wahlweise befestigbar ist. In diesem Fall können die Parameter nicht nur das zweite Kameraobjektiv repräsentieren (sodass die Emulation von verschiedenen zweiten Kameraobjektiven möglich ist), sondern auch das erste Kameraobjektiv repräsentieren (sodass die Emulation von dem zweiten Kameraobjektiv möglich ist basierend auf verschiedenen ersten Kameraobjektiven). Anschaulich können also Parameter für verschiedene Zuordnungen von ersten Kameraobjektiven (also dem Kameraobjektiv, mit dem tatsächlich Bilder aufgenommen werden) zu zweiten Kameraobjektiven (also dem Kameraobjektiv, das emuliert werden soll) bereitgestellt werden.

Mit den erfindungsgemäßen Verfahren kann eine Transformation eines Bildes nicht auf den physikalischen Parametern des zweiten Objektivs basieren, sondern auf dem Bildeindruck. Dadurch entfällt die Notwendigkeit einer komplexen Modellierung auf Basis von optischen Gesetzmäßigkeiten. Nach dem einmaligen Aufwand des Trainings kann dann eine weniger rechenintensive Transformation zur Angleichung der Aufnahmen verwendet werden (beispielsweise das trainierte künstliche neuronale Netz des Generators).

Des Weiteren entfällt die Notwendigkeit, die Zielcharakteristika physikalisch zu beschreiben. Damit können auch sehr subjektive Abbildungseigenschaften erfasst werden.

Das Verfahren ermöglicht es auch beliebige neue Objektive zu erfassen, auch wenn keine detaillierten technischen Daten vorliegen.

Die Erfindung wird nachfolgend anhand eines Ausführungsbeispiels mit Bezug auf die Zeichnungen beschrieben.
- Fig. 1: zeigt ein System mit einem Emulator.
- Fig. 2: zeigt ein System zum Konfigurieren eines Emulators.
- Fig. 3: zeigt ein System zum Bereitstellen von Bildern mittels verschiedener Objektive.
- Fig. 4: zeigt ein System zum Konfigurieren eines Emulators.
- Fig. 5: illustriert eine gewünschte Funktionsweise einer Bewertungseinheit.
- Fig. 6: zeigt ein System zum Konfigurieren einer Bewertungseinheit.

Gleiche oder gleichartige Elemente sind in den Zeichnungen mit denselben Bezugszeichen gekennzeichnet.

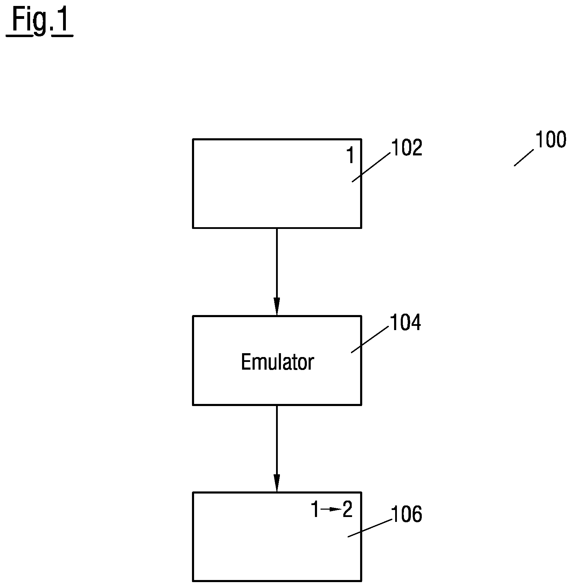

Fig. 1 zeigt in schematischer Darstellung ein System 100 mit einem Emulator 104, der ausgehend von einem ersten Bild 102, das mit einem ersten Objektiv (in anderen Worten: unter Verwendung des ersten Objektivs) aufgenommen wurde, ein emuliertes Bild 106 erzeugt, das bei einem menschlichen Betrachter den Eindruck erweckt, mit einem (von dem ersten Objektiv verschiedenen) zweiten Objektiv aufgenommen worden zu sein. Der Bildinhalt des emulierten Bilds 106 ist dabei identisch mit dem Bildinhalt des ersten Bilds 102. Das emulierte Bild 106 unterscheidet sich vom ersten Bild 102 aber durch den charakteristischen Eindruck der jeweiligen Objektive.

In den in den Figuren dargestellten Bildern ist zur einfachen Lesbarkeit der Figuren in der rechten oberen Ecke angegeben, ob es sich um ein (nicht mittels des Emulationsverfahrens bearbeiteten) Bild, das mittels des ersten Objektivs aufgenommen wurde ("1" in der rechten oberen Ecke), ein Bild, das mittels des zweiten Objektivs aufgenommen wurde ("2" in der rechten oberen Ecke), oder ein emuliertes Bild, das mittels des ersten Objektivs aufgenommen wurde und das den Bildeindruck des zweiten Objektivs emulieren soll ("1->2" in der rechten oberen Ecke), handelt.

Der Emulator 104 kann durch maschinelles Lernen konfiguriert (in anderen Worten: eingerichtet; in anderen Worten: trainiert) werden. Beispielsweise kann der Emulator 104 ein (künstliches) neuronales Netz sein.

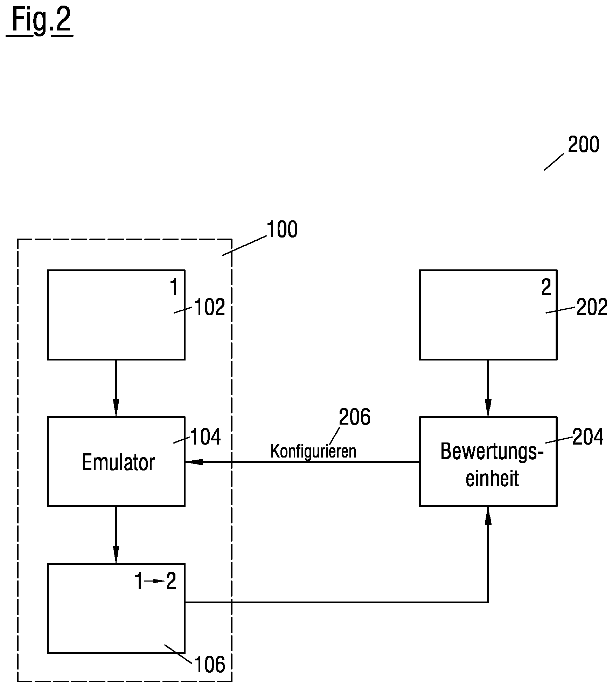

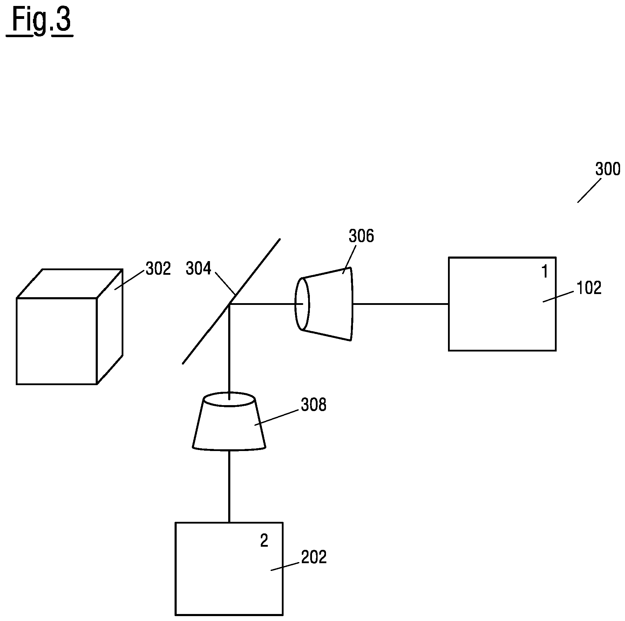

Fig. 2 zeigt in schematischer Darstellung ein System 200 zum Konfigurieren des Emulators 104. Dazu kann ein zweites Bild 202, das mit dem zweiten Objektiv aufgenommen wurde, bereitgestellt werden, und zwar so, dass das zweite Bild 202 den gleichen Inhalt (also beispielsweise die gleiche Szene oder das gleiche Motiv) zeigt wie das erste Bild 102. Das erste Bild 102 und das zweite Bild 202 unterscheiden sich also nur dadurch, dass das erste Bild 102 mit dem ersten Objektiv aufgenommen wurde, während das zweite Bild 202 mit dem zweiten Objektiv aufgenommen wurde, beispielsweise wie es weiter unten unter Bezugnahme auf Fig. 3 beschrieben ist.

Das emulierte Bild 106, das basierend auf dem mittels des ersten Objektivs aufgenommenen ersten Bild 102 eine Emulation des zweiten Objektivs darstellt, kann mit einer Bewertungseinheit 204 mit dem zweiten Bild 202, das tatsächlich mit dem zweiten Objektiv aufgenommen wurde, verglichen werden. Das Ergebnis des von der Bewertungseinheit 204 durchgeführten Vergleichs kann zum Konfigurieren (wie durch Pfeil 206 dargestellt) des Emulators 104 verwendet werden. Bei der Konfiguration können basierend auf jedem Paar von erstem Bild 102 und zugehörigem zweiten Bild 202 Parameter des Emulators 104 aktualisiert (beispielsweise leicht angepasst) werden. Die Parameter des Emulators 104 können beispielsweise Verknüpfungen von einzelnen Neuronen innerhalb eines künstlichen neuronalen Netzes umfassen.

In einer nicht in Fig. 2 dargestellten Ausführungsform können das erste Bild 102 und das zweite Bild 202 direkt einer Konfigurationseinheit übergeben werden, die den Emulator 104 basierend auf dem ersten Bild 102 und dem zweiten Bild 202 konfiguriert. Ein unmittelbares Vergleichen des emulierten Bilds 106 mit dem zweiten Bild 202 ist dann nicht unbedingt erforderlich.

Obwohl in Fig. 2 nur jeweils ein erstes Bild 102 und ein zweites Bild 202 dargestellt sind, sind zur Konfiguration des Emulators 104 üblicherweise mehrere erste Bilder 102 und mehrere zweite Bilder 202 nötig, wobei jedem der mehreren ersten Bilder 102 eines der mehreren zweiten Bilder 202 zugeordnet ist. Anschaulich wird der Emulator 104 also konfiguriert basierend auf möglichen Eingaben im normalen Betrieb (also den ersten Bildern 102) und den gewünschten Ausgaben, die der Emulator 104 auf eine Eingabe erzeugen soll (also den zweiten Bildern 202).

Fig. 3 zeigt in schematischer Darstellung ein System 300 zum Bereitstellen von Bildern 102, 202 mittels verschiedener Objektive 306, 308. Eine Vorlage 302, die Inhalt der aufgenommenen Bilder 102, 202 sein soll und auch als Bildmotiv bezeichnet werden kann, kann mittels eines Strahlteilers 304 und eines ersten Objektivs 306 abgebildet werden, um das erste Bild 102 zu erhalten. Die Vorlage 302 kann ferner mittels des Strahlteilers 304 und eines zweiten Objektivs 308 abgebildet werden, um das zweite Bild 202 zu erhalten. Das erste Objektiv 306 und das zweite Objektiv 308 können die gleiche Brennweite haben, so dass die Vorlage 302 im ersten Bild 102 und im zweiten Bild 202 zumindest im Wesentlich identisch dargestellt ist (in anderen Worten: so dass der Bildinhalt des ersten Bilds 102 zumindest im Wesentlichen dem Bildinhalt des zweiten Bilds 202 entspricht). Das erste Bild 102 und das zweite Bild 202 unterscheiden sich also nur durch die Abbildungscharakteristika (also den Look) der verwendeten Objektive (des ersten Objektivs 306 und des zweiten Objektivs 308). Um einen Einfluss der Bilderfassungseinheit (also beispielsweise des Bildsensors und gegebenenfalls in der Kamera stattfindenden Bild(vor)verarbeitung) auf die Bilder 102, 202 auszuschließen oder gering zu halten, können das erste Objektiv 306 und das zweite Objektiv 308 an identischer Kamerahardware (insbesondere mit identischen Bildsensoren) betrieben werden.

Die Verwendung des Strahlteilers 304 zum Erzeugen der zwei (zumindest im Wesentlichen) inhaltsgleichen Bilder 102, 202 ermöglicht das gleichzeitige Erzeugen der Bilder, was insbesondere bei bewegten Inhalten 302 von Vorteil ist. Insbesondere bei statischen Inhalten 302 kann jedoch auch das zweite Bild 202 direkt (also ohne Verwendung des Strahlteilers 304) unter Verwendung des zweiten Objektivs 308 aufgenommen werden, und danach oder davor kann das erste Bild 102 unter Verwendung des ersten Objektivs 306 (ohne Verwendung des Strahlteilers 304) aufgenommen werden.

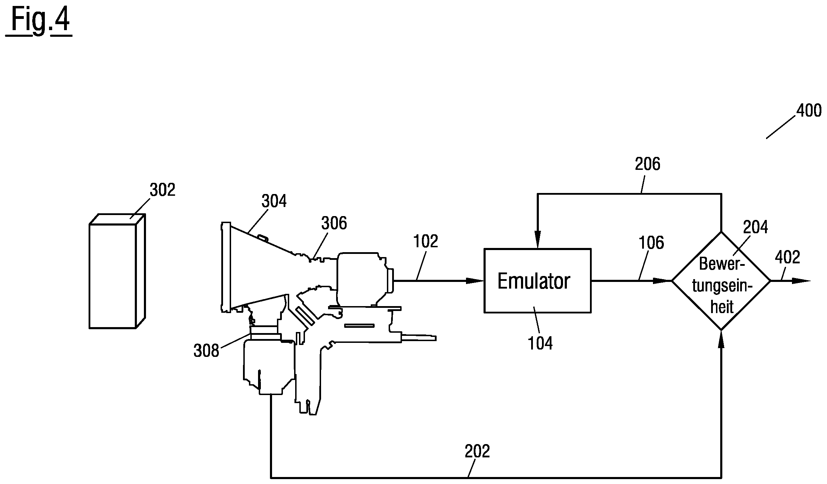

Fig. 4 zeigt in schematischer Darstellung ein System 400 zum Konfigurieren des Emulators 104. Wie durch Pfeil 402 angedeutet, ist das Trainingsziel für den Emulator 104, dass ein Bild, das mittels des ersten Objektivs 306 aufgenommen wurde, und das mittels des Emulators 104 in ein emuliertes Bild 106 transformiert wurde, nicht von einem Bild aus dem zweiten Objektiv 308 zu unterscheiden ist. Das Trainingsziel für die Bewertungseinheit 204 ist es, diese zu so trainieren, dass sie ein Bild, das mittels des ersten Objektivs 306 aufgenommen wurde, und das mittels des Emulators 104 in ein emuliertes Bild 106 transformiert wurde, dennoch von einem Bild aus dem zweiten Objektiv 308 unterscheiden kann.

Es können mit einem (festen oder bestimmten) ersten Objektiv 306 mehrere Trainings mit unterschiedlichen zweiten Objektiven 308 durchgeführt werden, die dann zu unterschiedlich konfigurierten Emulationsverfahren (also beispielsweise zu unterschiedlichen Parametern bzw. unterschiedlichen Parametersätzen) führen. Es ist dann möglich, die unterschiedlichen Parameter abzuspeichern (und dem (festen oder bestimmten) ersten Objektiv 306 und dem jeweiligen zweiten Objektiv 308 zuzuordnen) und nach Bedarf den einen oder einen anderen Parametersatz für das Emulationsverfahren einzusetzen. Somit ist es möglich, die Bilder aus einem ersten Objektiv 306 so erscheinen zu lassen wie die aus dem einen oder einem anderen zweiten Objektiv 308.

Es können mit einem (festen oder bestimmten) zweiten Objektiv 308 mehrere Trainings mit unterschiedlichen ersten Objektiven 306 durchgeführt werden, die dann zu unterschiedlich konfigurierten Emulationsverfahren (also beispielsweise zu unterschiedlichen Parametern (bzw. unterschiedlichen Parametersätzen) führen. Es ist dann möglich, die unterschiedlichen Parameter abzuspeichern (und dem jeweiligen ersten Objektiv 306 und dem (festen oder bestimmten) zweiten Objektiv 308 zuzuordnen) und nach Bedarf den einen oder einen anderen Parametersatz für das Emulationsverfahren einzusetzen. Somit ist es möglich, die Bilder aus verschiedenen ersten Objektiven 306 so erscheinen zu lassen ein Bild aus dem zweiten Objektiv 308.

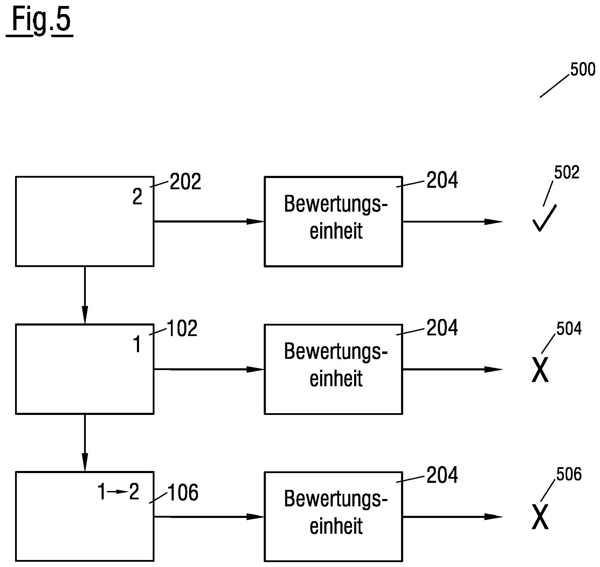

Fig. 5 zeigt eine Illustration 500 der gewünschten Funktionsweise der Bewertungseinheit 204. Die Bewertungseinheit 204 verarbeitet ein Bild als Eingabe und gibt Information darüber aus, ob das Bild mittels des zweiten Objektivs aufgenommen wurde oder nicht. In den in Fig. 5 dargestellten Beispielen gibt die Bewertungseinheit 204 als Information darüber, ob das Bild mittels des zweiten Objektivs aufgenommen wurde oder nicht, entweder "ja" (dargestellt durch einen Häkchen) oder "nein" (dargestellt durch ein X) aus. Allgemein kann jedoch die Information darüber, ob das Bild mittels des zweiten Objektivs aufgenommen wurde oder nicht, anstatt Information, die (binär) "ja" oder "nein" repräsentiert, auch Information in Form einer Wahrscheinlichkeit (beispielsweise in Prozent, beispielsweise dargestellt durch eine reelle oder natürliche Zahl zwischen 0 und 1 bzw. zwischen 0 % und 100 % oder durch eine "Fuzzy"-Angabe, wie beispielsweise "sehr sicher ja", "wahrscheinlich ja", "keine genaue Aussage möglich", "wahrscheinlich nein", "sehr sicher nein") enthalten. Beispielsweise kann die Information darüber, ob das Bild mittels des zweiten Objektivs aufgenommen wurde, beispielsweise durch einen pixelweisen Abstand zu einem Bild, das tatsächlich mit dem zweiten Objektiv aufgenommen wurde, angegeben werden. Alternativ kann die Information darüber, ob das Bild mittels des zweiten Objektivs aufgenommen wurde, Information darüber enthalten, wie ähnlich zu einem Bild, das tatsächlich mit dem zweiten Objektiv aufgenommen wurde, die Wirkung des Bilds auf einen menschlichen Betrachter ist.

Bei Eingabe des mittels des zweiten Objektivs aufgenommenen zweiten Bilds 202 soll die von der Bewertungseinheit 204 ausgegebene Information darüber, ob das zweite Bild 202 mittels des zweiten Objektivs aufgenommen wurde oder nicht, angeben, dass das zweite Bild 202 mittels des zweiten Objektivs aufgenommen wurde, wie durch Häkchen 502 dargestellt. Bei Eingabe des mittels des ersten Objektivs aufgenommenen Bilds 102 soll die von der Bewertungseinheit 204 ausgegebene Information darüber, ob das erste Bild 102 mittels des zweiten Objektivs aufgenommen wurde oder nicht, angeben, dass das Bild 102 nicht mittels des zweiten Objektivs aufgenommen wurde, wie durch ein X 504 dargestellt. Bei Eingabe des vom Emulator 104 erzeugten Bilds (also des emulierten Bilds 106) soll die von der Bewertungseinheit 204 ausgegebene Information darüber, ob das vom Emulator 104 erzeugte Bild 106 mittels des zweiten Objektivs aufgenommen wurde oder nicht, angeben, dass das vom Emulator 104 erzeugte Bild 106 nicht mittels des zweiten Objektivs aufgenommen wurde, wie durch ein X 506 dargestellt.

Wie weiter oben beschrieben, kann der Emulator 104 konfiguriert (in anderen Worten trainiert) werden. Ebenso kann die Bewertungseinheit 204 konfiguriert (in anderen Worten trainiert) werden. Dabei ist es Ziel, den Emulator 104 so zu konfigurieren, dass er Bilder erzeugt, die nicht von Bildern, die mittels des zweiten Objektivs aufgenommen wurden, unterschieden werden können. Ziel des Trainings der Bewertungseinheit 204 ist es, sie so zu konfigurieren, dass sie jedes Bild, das nicht mittels des zweiten Objektivs aufgenommen wurde, identifizieren kann. Dabei soll die Bewertungseinheit 204 auch Bilder, die mittels des Emulators 104 erzeugt wurden, als nicht mittels des zweiten Objektivs aufgenommen identifizieren können. Der Emulator 104 und die Bewertungseinheit 204 stehen in diesem Sinne also in Konkurrenz zueinander, sodass das Konfigurieren des Emulators 104 und das Konfigurieren der Bewertungseinheit 204 als ein Nullsummenspiel bezeichnet werden kann. Je "besser" der Emulator 104, desto schwieriger ist es für die Bewertungseinheit 204 ein emuliertes Bild als nicht tatsächlich mittels des zweiten Objektivs aufgenommen zu identifizieren.

Die Bewertungseinheit 204 kann durch maschinelles Lernen konfiguriert (in anderen Worten: eingerichtet; in anderen Worten: trainiert) werden. Beispielsweise kann die Bewertungseinheit 204 ein (künstliches) neuronales Netz sein.

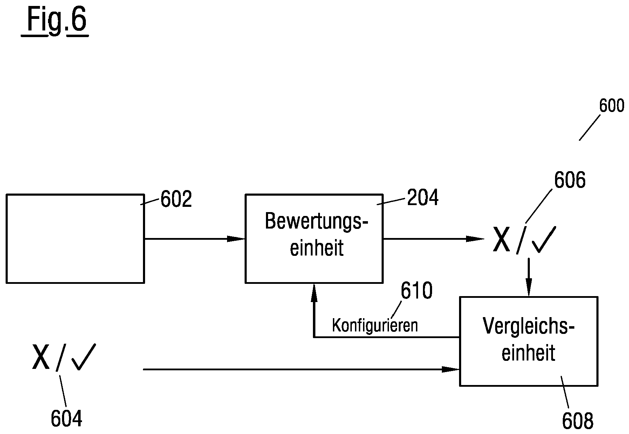

Fig. 6 zeigt in schematischer Darstellung ein System 600 zum Konfigurieren der Bewertungseinheit 204. Als Dateneingang zur Konfiguration der Bewertungseinheit 204 werden Bilder 602 und dazugehörige Informationen 604 darüber, ob das jeweilige Bild 602 mittels des zweiten Objektivs aufgenommen wurde oder nicht, bereitgestellt. Die Menge der Bilder 602 und der dazugehörigen Informationen 604 kann auch als Trainingsdatensatz bezeichnet werden.

Jedes Bild 602 wird der Bewertungseinheit 204 zugeführt, und die Bewertungseinheit 204 gibt Informationen 606 darüber aus, ob das Bild 602 (nach Einschätzung der Bewertungseinheit 204) mittels des zweiten Objektivs aufgenommen wurde oder nicht. In einer Vergleichseinheit 608 wird die Information 606, die von der Bewertungseinheit 204 ausgegeben wurde, zusammen mit der Information 604, die angibt, ob das Bild 602 tatsächlich mittels des zweiten Objektivs aufgenommen wurde oder nicht, verarbeitet, zum Beispiel verglichen, und basierend auf der Verarbeitung die Bewertungseinheit 204 und konfiguriert, wie durch Pfeil 610 dargestellt. Dabei kann das Konfigurieren aus einem Bestimmen von Parametern, die die Bewertungseinheit 204 verwendet, bestehen. Basierend auf jedem zu verarbeiteten Bild 602 und zugehöriger Information 604 können die Parameter aktualisiert (beispielsweise leicht angepasst) werden, beispielsweise unter Verwendung eines Gradientenverfahrens. Anschaulich kann das Konfigurieren aus einem Einstellen der Parameter der Bewertungseinheit 204 bestehen so, dass die Eingangsinformation 604 und die von der Bewertungseinheit 204 ermittelte Information 604 möglichst gut übereinstimmen für möglichst viele Eingangsbilder 602.

### Bezugszeichenliste

- 100: System mit einem Emulator
- 102: erstes Bild
- 104: Emulator
- 106: emuliertes Bild

- 200: System zum Konfigurieren des Emulators
- 202: zweites Bild
- 204: Bewertungseinheit
- 206: Pfeil, der Konfigurieren illustriert

- 300: System zum Bereitstellen von Bildern
- 302: Vorlage
- 304: Strahlteiler
- 306: erstes Objektiv
- 308: zweites Objektiv

- 400: System zum Konfigurieren des Emulators
- 402: Trainingsziel für die Bewertungseinheit

- 500: Illustration der gewünschten Funktionsweise der Bewertungseinheit
- 502: Häkchen
- 504: X
- 506: X

- 600: System zum Konfigurieren der Bewertungseinheit
- 602: Bilder
- 604: zu Bildern gehörige Informationen
- 606: ermittelte Information darüber, ob Bild mittels des zweiten Objektivs aufgenommen wurde oder nicht
- 608: Vergleichseinheit
- 610: Pfeil, der Konfigurieren illustriert

## Patentansprüche

1. Verfahren zum Konfigurieren eines Emulationsverfahrens zum Emulieren eines zweiten Kameraobjektivs (308), mit den Schritten:
- Ermitteln einer Mehrzahl von unter Verwendung eines ersten Kameraobjektivs (306) aufgenommenen ersten Bildern (102);
- Ermitteln einer Mehrzahl von unter Verwendung des zweiten Kameraobjektivs (308) aufgenommenen zweiten Bildern (202), deren Bildinhalt dem Bildinhalt der Mehrzahl von ersten Bildern (102) entspricht; und
- Konfigurieren des Emulationsverfahrens zum Emulieren des zweiten Kameraobjektivs (308) basierend auf der Mehrzahl von ersten Bildern (102) und der Mehrzahl von zweiten Bildern (202),
wobei dem Emulationsverfahren die ersten Bilder (102) als Eingabe bereitgestellt werden und Ausgaben des Emulationsverfahrens in Form von emulierten Bildern mittels der zweiten Bilder (202) bewertet werden.

2. Verfahren nach Anspruch 1,
wobei der Schritt des Konfigurierens des Emulationsverfahrens ein Ermitteln von Parametern, die das zweite Kameraobjektiv (308) repräsentieren, umfasst.

3. Verfahren nach einem der vorstehenden Ansprüche,
wobei die Mehrzahl von ersten Bildern (102) unter vorgegebenen Bedingungen aufgenommen sind;
wobei die Mehrzahl von zweiten Bildern (202) unter den vorgegebenen Bedingungen aufgenommen sind;
wobei die vorgegebenen Bedingungen mindestens eine vorgegebene Beleuchtungssituation und/oder mindestens eine vorgegebene Kameraobjektivblendeneinstellung und/oder mindestens eine vorgegebene Kameraobjektivfokuseinstellung und/oder mindestens eine vorgegebene Kameraobjektivbrennweiteneinstellung und/oder mindestens eine Kamerasensorempfindlichkeitseinstellung und/oder mindestens eine Kamerasensorweißabgleicheinstellung aufweisen.

4. Verfahren nach einem der vorstehenden Ansprüche,
wobei das Verfahren den Schritt des Erzeugens der Mehrzahl von ersten Bildern (102) und den Schritt des Erzeugens der Mehrzahl von zweiten Bildern (202) umfasst, wobei die Mehrzahl von ersten Bildern (102) und die Mehrzahl von zweiten Bildern (202) gleichzeitig mit zwei verschiedenen Bildsensoren aufgenommen werden;
wobei für das gleichzeitige Aufnehmen der Mehrzahl von ersten Bildern (102) und der Mehrzahl von zweiten Bildern (202) vorzugsweise ein jeweiliges Bildmotiv über einen Strahlteiler (304) von dem ersten Kameraobjektiv (306) auf einen ersten Bildsensor und über den Strahlteiler (304) von dem zweiten Kameraobjektiv (308) gleichzeitig auf einen zweiten Bildsensor abgebildet wird.

5. Verfahren nach einem der vorstehenden Ansprüche,
wobei das Emulationsverfahren ein erstes künstliches neuronales Netz verwendet;
wobei das erste künstliche neuronale Netz vorzugsweise ein deconvolutionales neuronales Netz aufweist.

6. Verfahren nach einem der vorstehenden Ansprüche,
wobei das Emulationsverfahren konfiguriert wird durch Optimierung einer Zielfunktion;
wobei die Zielfunktion vorzugsweise darauf basiert, inwieweit sich ein jeweiliges erstes Bild (102) nach einer Bearbeitung durch das Emulationsverfahren von einem entsprechenden zweiten Bild (202) unterscheidet; und/oder
wobei die Zielfunktion vorzugsweise darauf basiert, inwieweit ein jeweiliges erstes Bild (102) nach einer Bearbeitung durch das Emulationsverfahren auf einen Betrachter den Eindruck erweckt, mittels des zweiten Kameraobjektivs (308) aufgenommen worden zu sein; und/oder
wobei die Zielfunktion vorzugsweise auf einem zweiten künstlichen neuronalen Netz basiert, wobei das zweite künstliche neuronale Netz insbesondere ein convolutionales neuronales Netz aufweist.

7. Verfahren nach Anspruch 5,
wobei das Emulationsverfahren konfiguriert wird durch Optimierung einer Zielfunktion, die auf einem zweiten künstlichen neuronalen Netz basiert; und
wobei das Emulationsverfahren basierend auf einem Nullsummenspiel zwischen dem ersten künstlichen neuronalen Netz und dem zweiten künstlichen neuronalen Netz konfiguriert wird und/ oder wobei ein abwechselndes Optimieren des ersten künstlichen neuronalen Netzes und des zweiten künstlichen neuronalen Netzes erfolgt.

8. Verfahren zum Emulieren eines zweiten Kameraobjektivs (308), mit den Schritten:
- Ermitteln eines unter Verwendung eines ersten Kameraobjektivs (306) aufgenommenen Bilds (102);
- Ermitteln von Parametern, die das zweite Kameraobjektiv (308) repräsentieren; und
- Anwenden einer Bearbeitungsvorschrift auf das ermittelte Bild (102) unter Verwendung der Parameter, um das zweite Kameraobjektiv (308) zu emulieren,
wobei das Verfahren gemäß dem Verfahren nach einem der Ansprüche 1 bis 7 konfiguriert wurde.

9. Verfahren nach Anspruch 8,
wobei die Bearbeitungsvorschrift ein künstliches neuronales Netz, insbesondere ein deconvolutionales neuronales Netz, aufweist; und/oder
wobei das Konfigurieren des Verfahrens ein Bestimmen der Parameter umfasst.

10. Verfahren nach Anspruch 8 oder 9,
wobei die Parameter in verschlüsselter Form bereitgestellt sind, wobei der Schritt des Ermittelns der Parameter ein Entschlüsseln der Parameter basierend auf einem Benutzerschlüssel umfasst.

11. Verfahren nach einem der Ansprüche 8 bis 10,
wobei eine Mehrzahl von Parametersätzen bereitgestellt sind, die einer Mehrzahl von verschiedenen zweiten Kameraobjektiven und/oder einer Mehrzahl von verschiedenen ersten Kameraobjektiven und/oder einer Mehrzahl von Kameraobjektivblendeneinstellungen und/oder einer Mehrzahl von Kameraobjektivfokuseinstellungen und/oder einer Mehrzahl von Kameraobjektivbrennweiteneinstellungen und/oder einer Mehrzahl von Kamerasensorempfindlichkeitseinstellungen und/oder einer Mehrzahl von Kamerasensorweißabgleicheinstellungen entsprechen;
wobei das Verfahren ferner die Schritte umfasst:
Auswählen eines der zweiten Kameraobjektive und/oder eines der ersten Kameraobjektive und/oder einer Kameraobjektivblendeneinstellung und/oder einer Kameraobjektivfokuseinstellung und/oder einer Kameraobjektivbrennweiteneinstellung und/oder einer Kamerasensorempfindlichkeitseinstellung und/oder einer Kamerasensorweißabgleicheinstellung;
Ermitteln eines Parametersatzes, der Parameter, die das ausgewählte zweite Kameraobjektiv und/oder das das ausgewählte erste Kameraobjektiv und/oder die ausgewählte Kameraobjektivblendeneinstellung und/oder die ausgewählte Kameraobjektivfokuseinstellung und/oder die ausgewählte Kameraobjektivbrennweiteneinstellung und/oder die ausgewählte Kamerasensorempfindlichkeitseinstellung und/oder die ausgewählte Kamerasensorweißabgleicheinstellung repräsentieren, enthält; und
Anwenden der Bearbeitungsvorschrift auf das aufgenommene Bild unter Verwendung der Parameter des ermittelten Parametersatzes, um das zweite Kameraobjektiv zu emulieren.

12. Verfahren nach einem der Ansprüche 8 bis 11,
wobei für das Ermitteln des Bilds das erste Kameraobjektiv ein Bildmotiv auf einen Bildsensor abbildet und der Bildsensor entsprechende Bildsignale erzeugt.

13. Computerprogrammprodukt, umfassend Befehle, die bei der Ausführung durch einen Computer diesen veranlassen, das Verfahren nach einem der vorstehenden Ansprüche auszuführen.

14. Bewegtbildkamera, die zum Aufnehmen einer zeitlichen Folge von Einzelbildern ausgebildet ist und die eine Steuereinheit aufweist, welche dazu ausgebildet ist, die Einzelbilder gemäß dem Verfahren nach einem der Ansprüche 8 bis 12 zu bearbeiten.

15. Bewegtbildkamera nach Anspruch 14,
wobei die Steuereinheit dazu ausgebildet ist, ein künstliches neuronales Netz zu bilden; und/oder
wobei die Steuereinheit ein Entschlüsselungsmodul aufweist, welches dazu ausgebildet ist, die Parameter zu entschlüsseln; und/oder
wobei die Bewegtbildkamera ein Gehäuse aufweist, welches einen Bildsensor zum Erzeugen von Bildsignalen beherbergt und welches einen Wechselobjektivanschluss aufweist, an dem das erste Kameraobjektiv wahlweise befestigbar ist.

## Claims

1. A method for configuring an emulation method for emulating a second camera objective (308), comprising the steps:
- determining a plurality of first images (102) which are recorded using a first camera objective (306);
- determining a plurality of second images (202) which are recorded using the second camera objective (308) and whose image content corresponds to the image content of the plurality of first images (102); and
- configuring the emulation method for emulating the second camera objective (308) on the basis of the plurality of first images (102) and the plurality of second images (202),
wherein the first images (102) are provided as input to the emulation method and outputs of the emulation method in the form of emulated images are assessed by means of the second images (202).

2. A method according to claim 1,
wherein the step of configuring the emulation method comprises determining parameters that represent the second camera objective (308).

3. A method according to one of the preceding claims,
wherein the plurality of first images (102) are recorded under predefined conditions;
wherein the plurality of second images (202) are recorded under the predefined conditions;
wherein the predefined conditions comprise at least one predefined lighting situation; and/or at least one predefined camera objective aperture setting; and/or at least one predefined camera objective focus setting; and/or at least one predefined camera objective focal length setting; and/or at least one camera sensor sensitivity setting; and/or at least one camera sensor white balance setting.

4. A method according to any one of the preceding claims,
wherein the method comprises the step of generating the plurality of first images (102) and the step of generating the plurality of second images (202), wherein the plurality of first images (102) and the plurality of second images (202) are simultaneously recorded by two different image sensors;
wherein, for the simultaneous recording of the plurality of first images (102) and the plurality of second images (202), a respective image motif is preferably imaged onto a first image sensor via a beam splitter (304) by the first camera objective (306) and is simultaneously imaged onto a second image sensor via the beam splitter (304) by the second camera objective (308).

5. A method according to any one of the preceding claims,
wherein the emulation method uses a first artificial neural network;
wherein the first artificial neural network preferably has a deconvolutional neural network.

6. A method according to any one of the preceding claims,
wherein the emulation method is configured by optimizing a target function; wherein the target function is preferably based on the extent to which a respective first image (102) differs from a corresponding second image (202) after a processing by the emulation method; and/or
wherein the target function is preferably based on the extent to which a respective first image (102), after a processing by the emulation method, creates the impression on an observer of having been recorded by means of the second camera objective (308); and/or
wherein the target function is preferably based on a second artificial neural network, wherein the second artificial neural network in particular has a convolutional neural network.

7. A method according to claim 5,
wherein the emulation method is configured by optimizing a target function which is based on a second artificial neural network; and
wherein the emulation method is configured on the basis of a zero-sum game between the first artificial neural network and the second artificial neural network, and/or wherein an alternate optimization of the first artificial neural network and the second artificial neural network takes place.

8. A method for emulating a second camera objective (308), comprising the steps:
- determining an image (102) recorded using a first camera objective (306);
- determining parameters that represent the second camera objective (308); and
- applying a processing rule to the determined image (102) using the parameters in order to emulate the second camera objective (308),
wherein the method was configured in accordance with the method according to any one of the claims 1 to 7.

9. A method according to claim 8,
wherein the processing rule has an artificial neural network, in particular a deconvolutional neural network; and/or
wherein the configuration of the method comprises determining the parameters.

10. A method according to claim 8 or 9,
wherein the parameters are provided in encrypted form, wherein the step of determining the parameters comprises decrypting the parameters on the basis of a user key.

11. A method according to any one of the claims 8 to 10,
wherein a plurality of parameter sets are provided that correspond to a plurality of different second camera objectives; and/or to a plurality of different first camera objectives; and/or to a plurality of camera objective aperture settings; and/or to a plurality of camera objective focus settings; and/or to a plurality of camera objective focal length settings; and/or to a plurality of camera sensor sensitivity settings; and/or to a plurality of camera sensor white balance settings;
wherein the method further comprises the steps:
selecting one of the second camera objectives; and/or one of the first camera objectives; and/or a camera objective aperture setting; and/or a camera objective focus setting; and/or a camera objective focal length setting; and/or a camera sensor sensitivity setting; and/or a camera sensor white balance setting;
determining a parameter set which includes parameters that represent the selected second camera objective; and/or the selected first camera objective; and/or the selected camera objective aperture setting; and/or the selected camera objective focus setting; and/or the selected camera objective focal length setting; and/or the selected camera sensor sensitivity setting; and/or the selected camera sensor white balance setting; and
applying the processing rule to the recorded image using the parameters of the determined parameter set in order to emulate the second camera objective.

12. A method according to any one of the claims 8 to 11,
wherein, for the determination of the image, the first camera objective images an image motif onto an image sensor and the image sensor generates corresponding image signals.

13. A computer program product comprising commands which, when executed by a computer, cause said computer to perform the method according to any one of the preceding claims.

14. A motion picture camera which is configured to record a time sequence of frames and which has a control unit that is configured to process the frames in accordance with the method according to any one of the claims 8 to 12.

15. A motion picture camera according to claim 14,
wherein the control unit is configured to form an artificial neural network; and/or
wherein the control unit has a decryption module which is configured to decrypt the parameters; and/or
wherein the motion picture camera has a housing that accommodates an image sensor for generating image signals and that has an interchangeable lens mount to which the first camera objective is selectively fastenable.

## Revendications

1. Procédé de configuration d'un procédé d'émulation pour émuler un deuxième objectif de caméra (308), comprenant les étapes consistant à :
- déterminer une pluralité de premières images (102) prises en utilisant un premier objectif de caméra (306) ;
- déterminer une pluralité de deuxièmes images (202) prises en utilisant le deuxième objectif de caméra (308), dont le contenu d'image correspond au contenu d'image de la pluralité de premières images (102) ; et
- configurer le procédé d'émulation pour émuler le deuxième objectif de caméra (308) en se basant sur la pluralité de premières images (102) et sur la pluralité de deuxièmes images (202),
dans lequel les premières images (102) sont fournies en entrée au procédé d'émulation, et les sorties du procédé d'émulation sous forme d'images émulées sont évaluées au moyen des deuxièmes images (202).

2. Procédé selon la revendication 1,
dans lequel l'étape de configuration du procédé d'émulation consiste à déterminer des paramètres représentant le deuxième objectif de caméra (308).

3. Procédé selon l'une des revendications précédentes,
dans lequel la pluralité de premières images (102) sont prises dans des conditions prédéterminées ;
la pluralité de deuxièmes images (202) sont prises dans les conditions prédéterminées ;
les conditions prédéterminées comprennent au moins une situation d'éclairage prédéterminée et/ou au moins un réglage prédéterminé du diaphragme de l'objectif de caméra et/ou au moins un réglage prédéterminé de la mise au point de l'objectif de caméra et/ou au moins un réglage prédéterminé de la distance focale de l'objectif de caméra et/ou au moins un réglage de la sensibilité du capteur de caméra et/ou au moins un réglage de l'équilibrage des blancs du capteur de caméra.

4. Procédé selon l'une des revendications précédentes,
dans lequel le procédé comprend l'étape consistant à générer la pluralité de premières images (102) et l'étape consistant à générer la pluralité de deuxièmes images (202), la pluralité de premières images (102) et la pluralité de deuxièmes images (202) étant prises simultanément avec deux capteurs d'image différents ;
pour la prise simultanée de la pluralité de premières images (102) et de la pluralité de deuxièmes images (202), un motif d'image respectif est de préférence représenté sur un premier capteur d'image par un séparateur de faisceaux (304) depuis le premier objectif de caméra (306) et simultanément sur un deuxième capteur d'image par le séparateur de faisceaux (304) depuis le deuxième objectif de caméra (308).

5. Procédé selon l'une des revendications précédentes,
dans lequel le procédé d'émulation utilise un premier réseau neuronal artificiel ;
le premier réseau neuronal artificiel comprend de préférence un réseau neuronal déconvolutionnel.

6. Procédé selon l'une des revendications précédentes,
dans lequel le procédé d'émulation est configuré en optimisant une fonction cible ;
la fonction cible étant de préférence basée sur la mesure dans laquelle une première image respective (102), après un traitement par le procédé d'émulation, diffère d'une deuxième image correspondante (202) ; et/ou la fonction cible étant de préférence basée sur la mesure dans laquelle une première image respective (102), après un traitement par le procédé d'émulation, donne à un observateur l'impression d'avoir été pris au moyen du deuxième objectif de caméra (308) ; et/ou
la fonction cible étant de préférence basée sur un deuxième réseau neuronal artificiel, le deuxième réseau neuronal artificiel comprenant en particulier un réseau neuronal convolutionnel.

7. Procédé selon la revendication 5,
dans lequel le procédé d'émulation est configuré en optimisant une fonction cible basée sur un deuxième réseau neuronal artificiel ; et
le procédé d'émulation est configuré en se basant sur un jeu à somme nulle entre le premier réseau neuronal artificiel et le deuxième réseau neuronal artificiel, et/ou
il est prévu une optimisation alternée du premier réseau neuronal artificiel et du deuxième réseau neuronal artificiel.

8. Procédé d'émulation d'un deuxième objectif de caméra (308), comprenant les étapes consistant à :
- déterminer une image (102) prise en utilisant un premier objectif de caméra (306) ;
- déterminer des paramètres représentant le deuxième objectif de caméra (308) ; et
- appliquer une règle de traitement à l'image déterminée (102) en utilisant les paramètres pour émuler le deuxième objectif de caméra (308),
le procédé ayant été configuré par le procédé selon l'une des revendications 1 à 7.

9. Procédé selon la revendication 8,
dans lequel la règle de traitement comprend un réseau neuronal artificiel, en particulier un réseau neuronal déconvolutionnel ; et/ou
la configuration du procédé comprend une détermination des paramètres.

10. Procédé selon la revendication 8 ou 9,
dans lequel les paramètres sont fournis sous forme cryptée, l'étape de détermination des paramètres consistant à décrypter les paramètres en se basant sur une clé utilisateur.

11. Procédé selon l'une des revendications 8 à 10,
dans lequel une pluralité d'ensembles de paramètres sont fournis, qui correspondent à une pluralité de deuxièmes objectifs de caméra différents et/ou à une pluralité de premiers objectifs de caméra différents et/ou à une pluralité de réglages du diaphragme de l'objectif de caméra et/ou à une pluralité de réglages de la mise au point de l'objectif de caméra et/ou à une pluralité de réglages de la distance focale de l'objectif de caméra et/ou à une pluralité de réglages de la sensibilité du capteur de caméra et/ou à une pluralité de réglages de l'équilibrage des blancs du capteur de caméra ; le procédé comprenant en outre les étapes consistant à :
sélectionner l'un des deuxièmes objectifs de caméra et/ou l'un des premiers objectifs de caméra et/ou un réglage du diaphragme de l'objectif de caméra et/ou un réglage de la mise au point de l'objectif de caméra et/ou un réglage de la distance focale de l'objectif de caméra et/ou un réglage de la sensibilité du capteur de caméra et/ou un réglage de l'équilibrage des blancs du capteur de caméra ;
déterminer un ensemble de paramètres comprenant des paramètres qui représentent le deuxième objectif de caméra sélectionné et/ou le premier objectif de caméra sélectionné et/ou le réglage sélectionné du diaphragme de l'objectif de caméra et/ou le réglage sélectionné de la mise au point de l'objectif de caméra et/ou le réglage sélectionné de la distance focale de l'objectif de caméra et/ou le réglage sélectionné de la sensibilité du capteur de caméra et/ou le réglage sélectionné de l'équilibrage des blancs du capteur de caméra ; et
appliquer la règle de traitement à l'image prise en utilisant les paramètres de l'ensemble de paramètres déterminés pour émuler le deuxième objectif de caméra.

12. Procédé selon l'une des revendications 8 à 11,
dans lequel, pour la détermination de l'image, le premier objectif de caméra représente un motif d'image sur un capteur d'image, et le capteur d'image génère des signaux d'image correspondants.

13. Produit de programme informatique comprenant des instructions qui, lorsqu'elles sont exécutées par un ordinateur, amènent ce dernier à mettre en oeuvre le procédé selon l'une des revendications précédentes.

14. Caméra à images animées conçue pour enregistrer une séquence temporelle d'images individuelles et comprenant une unité de commande conçue pour traiter les images individuelles par le procédé selon l'une des revendications 8 à 12.

15. Caméra à images animées selon la revendication 14,
dans laquelle l'unité de commande est conçue pour former un réseau neuronal artificiel ; et/ou
l'unité de commande comprend un module de décryptage conçu pour décrypter les paramètres ; et/ou
la caméra à images animées comprend un boîtier qui abrite un capteur d'images conçu pour générer des signaux d'images et qui comprend une monture d'objectif interchangeable sur laquelle le premier objectif de caméra peut être fixé au choix.
